# EUROPEAN PATENT APPLICATION

(11) **EP 4 303 093 A1**
(43) Date of publication of application: **10.01.2024**
(21) Application number: 23168628.8
(22) Date of filing: 19.04.2023
(51) Int. Cl.: B61L 23/04

(54) **RAIL STATE MONITORING APPARATUS AND RAIL STATE MONITORING METHOD**

(30) Priority: 13.06.2022 JP 2022095175
(71) Applicant: Hitachi, Ltd., Tokyo 100-8280 (JP)
(72) Inventor: KAWABATA, Ryuzo, Tokyo, 100-8280 (JP); OGATA, Kuniomi, Tokyo, 100-8280 (JP)
(74) Representative: MERH-IP Matias Erny Reichl Hoffmann Patentanwälte PartG mbB

(57) **Abstract**

A rail state monitoring apparatus 1 includes: a plurality of detection devices 2 provided on a train that travels on left and right railroad rails forming a track, and a processing device 3. The train is composed of one or a plurality of vehicles. For each of the plurality of detection devices 2, the detection device 2 has a magnetic sensor unit group 77 that is one or more magnetic sensor units facing the railroad rail, the magnetic sensor unit detects a peculiar point when the magnetic sensor unit passes over the peculiar point on the railroad rail, and the detection device 2 outputs a signal based on a result of the detection by the magnetic sensor unit group 77. The plurality of detection devices 2 include detection devices provided symmetrically on right and left sides of the train and/or detection devices provided on front and rear sides of the train. The processing device 3 receives signals output respectively from the plurality of detection devices 2, and discriminates whether the peculiar point is a rail seam point or a rail fracture point, based on a detection signal based on the signals from the plurality of detection devices 2.

## Description

### BACKGROUND OF THE INVENTION

### 1. Field of the Invention

The present invention relates generally to rail state monitoring.

### 2. Description of Related Art

JP2014-102197A describes a magnetic induction type rail flaw detector for detecting a surface flaw and a lateral laceration on an inspection rail.

There are rail-to-rail seams in a track. A fracture in a rail can also occur due to a flaw (especially lateral laceration) in the rail or other causes. Where there are rail seams or rail fractures, at least part of a rail surface is separated in a longitudinal direction of the rail.

Although the magnetic induction type rail flaw detector described in JP2014-102197A can detect the surface flaw and the lateral laceration on the inspection rail, the magnetic induction type rail flaw detector cannot discriminate between the rail fracture and the rail seam.

An object of the invention is to discriminate between the rail fracture and the rail seam.

### SUMMARY OF THE INVENTION

To solve the above problems, a typical rail state monitoring apparatus of the invention includes a plurality of detection devices provided on a train that travels on left and right railroad rails forming a track, and a processing device. The train is composed of one or a plurality of vehicles. For each of the plurality of detection devices, the detection device has a magnetic sensor unit group that is one or more magnetic sensor units facing the railroad rail; the magnetic sensor unit detects a peculiar point when the magnetic sensor unit passes over the peculiar point on the railroad rail; and the detection device outputs a signal based on a result of the detection by the magnetic sensor unit group. The plurality of detection devices include detection devices provided symmetrically on right and left sides of the train and/or detection devices provided on front and rear sides of the train. The processing device receives signals output respectively from the plurality of detection devices, and discriminates whether the peculiar point is a rail seam point or a rail fracture point based on a detection signal based on the signals from the plurality of detection devices.

According to the invention, it is possible to discriminate between the rail fracture(s) and the rail seam(s).

Problems, configurations, and effects other than those described above will be clarified by the following description of embodiments.

### BRIEF DESCRIPTION OF THE DRAWINGS

FIG. 1 is a schematic diagram of a rail state monitoring apparatus according to a first embodiment of the invention;
FIG. 2 is a perspective view of a detection device in the first embodiment;
FIG. 3 is a bottom view of the detection device in the first embodiment;
FIG. 4 is a partially cutaway plan view of the detection device in the first embodiment;
FIG. 5 is a schematic diagram illustrating an operating state of the first embodiment;
FIG. 6 is a schematic diagram illustrating another operating state of the first embodiment;
FIG. 7 is a schematic diagram illustrating an example of arrangement of the detection devices;
FIG. 8 is a block diagram of the rail state monitoring apparatus according to the first embodiment;
Fig. 9 is a frequency characteristic diagram of an excitation current supplied to an oscillation coil;
FIG. 10 is a block diagram of a detection unit;
FIG. 11 is a flowchart of a rail state monitoring process;
FIG. 12 is a diagram illustrating an example of a display image displayed on a display unit;
FIG. 13 is a block diagram of a rail state monitoring apparatus according to a second embodiment;
FIG. 14 is a block diagram of a rail state monitoring apparatus according to a third embodiment;
FIG. 15 is a schematic diagram illustrating an example of seam points and rail fracture points; and
FIG. 16 is a diagram illustrating an example of a detection signal (time-series waveform) relating to the seam point.

### DESCRIPTION OF EMBODIMENTS

Several embodiments will be described below with reference to the drawings.

### First Embodiment

### External Configuration of First Embodiment

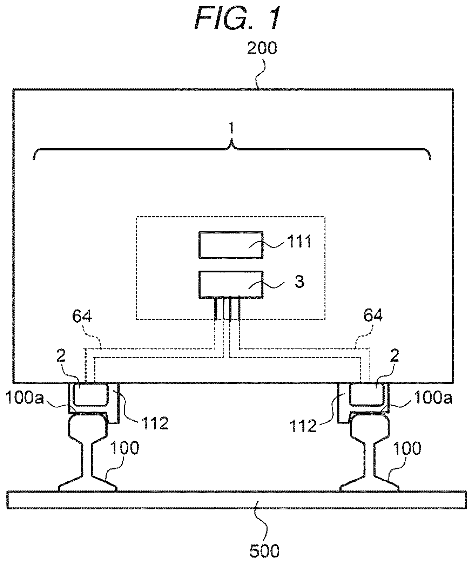

FIG. 1 is a schematic diagram of a rail state monitoring apparatus according to a first embodiment of the invention.

In FIG. 1, a rail state monitoring apparatus 1 includes a detection device 2, a processing device 3, a connection cable 64, and a power supply 111. The rail state monitoring apparatus 1 is mounted on each of one or more vehicles 200 (railway vehicles) in a train. The detection device 2 is installed at a position facing a tread 100a of a railroad rail 100, and the processing device 3 and the power supply 111 are installed inside the vehicle 200. The power supply 111 supplies a drive current to the detection device 2 and the processing device 3 to operate the detection device 2 and the processing device 3.

The vehicle 200 travels on the railroad rail 100 (hereinafter, referred to as a rail 100) as an inspection target. That is, a wheel 112 of the vehicle 200 rotates while being in contact with the tread 100a. In this case, the detection device 2 detects a state of the rail 100, and a signal representing a detection result is sent to the processing device 3 via a connection cable 64. Then, processing such as signal collection, signal analysis, and display is executed in the processing device 3, and the state of the rail 100 can be monitored. The power supply 111 may be a stabilized power supply circuit that is provided in the vehicle and driven by an alternating current of 100 V, or may be an uninterruptible power supply device with a built-in battery. Incidentally, an object called a "ground element" may be embedded in a sleeper 500 or the like of the rail 100, and an object called an "onboard element" may be installed in the vehicle 200.

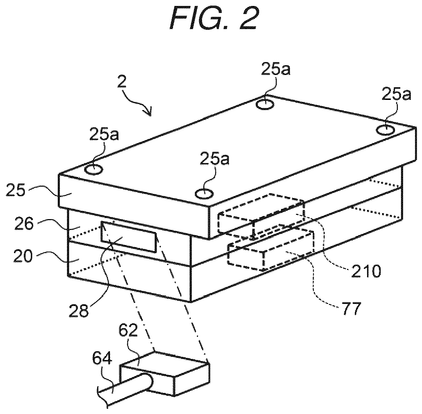

FIG. 2 is a perspective view of the detection device 2. In the following description, in the explanation of the same kind of elements to which reference numerals composed of a parent code and a branch code are attached, the branch code will be omitted when any element is acceptable; and the reference numerals composed of the parent code and the branch code will be used to distinguish elements.

In FIG. 2, the detection device 2 includes a lower housing 20 (an example of a first housing), an upper housing 26 (an example of a second housing), and a flange 25, which are fixed to each other. The lower housing 20 and the upper housing 26 are formed in a substantially rectangular parallelepiped shape, and an upper surface of the lower housing 20 and a lower surface of the upper housing 26 are joined. Also, the flange 25 is formed in a rectangular plate shape and fixed to an upper surface of the upper housing 26. A connector 28 is attached to one side surface of the upper housing 26. A connector 62 is attached to one end of the connection cable 64. The connectors 28 and 62 are fittable to each other, and when the connectors 28 and 62 are fitted to each other, the detection device 2 and the processing device 3 (see FIG. 1) can communicate bidirectionally via the connection cable 64. The connectors 28 and 62 have an airtight and waterproof structure, and prevent water, oil, dust, and the like from entering the detection device 2 and the connection cable 64 when the connectors 28 and 62 are fitted together. The connector 28 is preferably a feedthrough connector, but may not be the feedthrough connector.

Through holes 25a are respectively formed in four corners of the flange 25. Further, the vehicle 200 (see FIG. 1) is provided with a screw hole (not illustrated) at a position facing the through hole 25a in a location where the detection device 2 is placed. When a bolt (not illustrated) is inserted into the through hole 25a and tightened into the screw hole formed in the vehicle 200, the detection device 2 is fixed at a predetermined position on the vehicle 200. The lower housing 20 incorporates a magnetic sensor unit group 77 for detecting a state of the rail 100 (see FIG. 1). The magnetic sensor unit group 77 is a set of N magnetic sensor units. Although N is an integer equal to two or more in the present embodiment, N may be one. The upper housing 26 also incorporates a preamplifier unit 210 that amplifies a signal detected by each magnetic sensor unit in the magnetic sensor unit group 77. Details of the magnetic sensor unit group 77 and the preamplifier unit 210 will be described below.

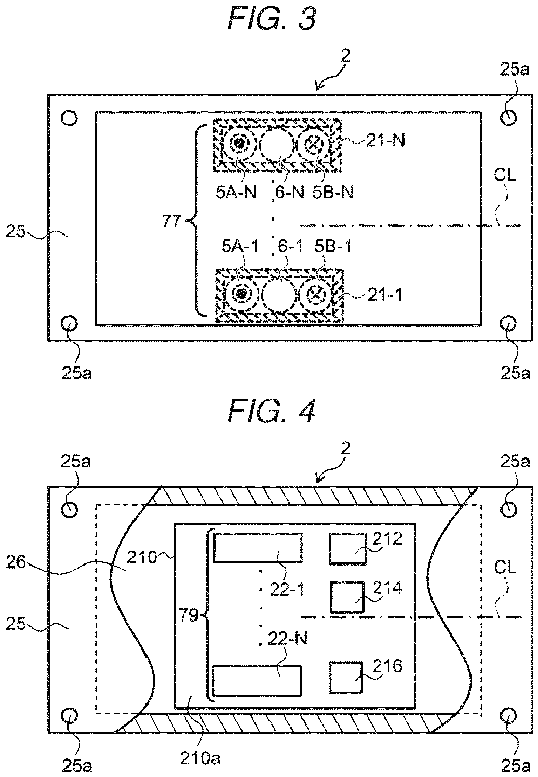

As described above, although the detection device 2 is fixed at the predetermined position on the vehicle 200, the predetermined position is preferably a position where a center line (not illustrated) in a width direction of the rail 100 and a center line CL (see FIG. 3) in a width direction of the magnetic sensor unit group 77 are aligned. Further, it is preferable that the center line CL corresponds to (a center line in a width direction of the detection device 2) a center of the detection device 2. Internal spaces of the lower housing 20 and the upper housing 26 are filled with a filler (not illustrated) that is an insulating and non-magnetic material to form a resin mold structure. As a result, the magnetic sensor unit group 77 and the preamplifier unit 210 are fixed and held inside the lower housing 20 and the upper housing 26, and thus abnormality of the magnetic sensor unit group 77 and the preamplifier unit 210 due to vibrations and shocks caused by the traveling of the vehicle and displacement due to positional changes can be prevented. In the example illustrated in FIG. 2, the lower housing 20 and the upper housing 26 have a substantially rectangular parallelepiped shape, but may have another shape such as a cubic shape, a columnar shape, and a prismatic shape.

FIG. 3 is a bottom view of the detection device 2.

As illustrated in FIG. 3, the magnetic sensor unit group 77 has N (in the present embodiment, N is an integer equal to two or more as described above) magnetic sensor units 21-1 to 21-N arranged in a row along a width direction of the lower housing 20, that is, along the width direction of the rail 100 (see FIG. 1).

Further, a magnetic sensor unit 21-k (k is any integer from 1 to N) has an oscillation coil 5A-k, an oscillation coil 5B-k, and a reception coil 6-k. Each of these coils is configured by winding a coated copper wire.

The oscillation coil 5A-k, the reception coil 6-k, and the oscillation coil 5B-k are arranged along a laying direction of the rail 100 (see FIG. 1), and the reception coil 6-k is placed with an equal distance from the oscillation coil 5A-k and the oscillation coil 5B-k, respectively. Alternating currents of a predetermined oscillation frequency f (predetermined frequency) are supplied to the oscillation coils 5A-k and 5B-k from the processing device 3 (see FIG. 1) via the connection cables 64. As a result, alternating magnetic fields are generated respectively from the oscillation coils 5A-k and 5B-k to excite the rail 100, and the magnetic flux generated from the excited railroad rails generates an induced voltage in the reception coil 6-k.

FIG. 4 is a partially cutaway plan view of the detection device 2. That is, in FIG. 4, a center portion of the flange 25 is cut away to expose the inside of the upper housing 26.

In FIG. 4, the preamplifier unit 210 includes an amplification filter unit group 79, an acceleration sensor unit 212, an angular velocity sensor unit 214, a temperature sensor unit 216, and a printed circuit board 210a on which these units are mounted. The amplification filter unit group 79 has the same number (N) of amplification filter units 22-1 to 22-N as the number of the magnetic sensor units 21 described above. The magnetic sensor units 21 may be in one-to-one correspondence to the amplification filter units 22.

The amplification filter unit 22-k (k is any integer from 1 to N) amplifies, and performs filtering processing on, the induced voltage generated in the reception coil 6-k, and transmits the amplified and filtered result to the processing device 3 via the connection cable 64 (see FIG. 1). The processing device 3 performs analyzing processing on the received signal, and detects a magnetic signal generated from the railroad rail 100.

The lower housing 20 is made of a non-magnetic material. This is because the lower housing 20 incorporates the oscillation coils 5A-k and 5B-k for generating alternating magnetic fields and the reception coil 6-k for detecting the magnetic flux generated from the railroad rail. In particular, considering that the detection device 2 is installed outdoors and in a traveling vehicle, the lower housing 20 is preferably made of fiber-reinforced resin or the like, which has excellent impact resistance and environmental resistance.

On the other hand, the upper housing 26 incorporating the preamplifier unit 210 is made of metal such as aluminum that functions as an electromagnetic shield. This is for shielding electromagnetic waves generated from the preamplifier unit 210 and preventing electromagnetic waves from entering the preamplifier unit 210 from the outside. Moreover, it is preferable that the upper housing 26 and the flange 25 have an integral structure. That is, it is preferable to form the flange 25 and the upper housing 26 by cutting a metal block. As a result, strength robustness of the flange 25 and the upper housing 26 can be improved, and the number of components of the detection device 2 can be reduced.

The lower housing 20 has an insert nut (not illustrated) and is screwed to the upper housing 26. Further, the lower housing 20 and the upper housing 26 are integrated by bonding with a silicone adhesive having excellent weather resistance, heat resistance, and cold resistance. Further, as the acceleration sensor unit 212 and the angular velocity sensor unit 214 are mounted on the printed circuit board 210a, movements of the detection device 2 when the vehicle 200 is traveling can be detected.

Further, the printed circuit board 210a includes the temperature sensor unit 216 and the temperature of the circuit board can be monitored, so that changes in the operating state due to heat generation of the amplification filter unit 22 can be constantly checked. Also, since the preamplifier unit 210 is hermetically sealed inside the upper housing 26, the temperature detected by the temperature sensor unit 216 is higher than the outside air temperature. Therefore, when information (for example, information (for example, table or machine learning model) in which the temperature detected by the temperature sensor unit 216 is input and the outside air temperature is output) representing a relationship between the outside air temperature and the temperature inside the upper housing 26 is set in the processing device 3 in advance, and the processing device 3 uses the information, the outside air temperature when the vehicle is traveling can be estimated from the temperature detected by the temperature sensor unit 216.

The connection cable 64 connecting the detection device 2 and the processing device 3 includes a power supply line of the preamplifier unit 210, output signal lines (via amplification filter unit group 79) from the respective reception coils 6-1 to 6-N, input signal lines for excitation signals to the respective oscillation coils 5A-1 to 5A-N and 5B-1 to 5B-N, and output signal lines of the acceleration sensor unit 212, the angular velocity sensor unit 214, and the temperature sensor unit 216. Therefore, the connection cable 64 is preferably a multi-pair shielded cable with excellent noise resistance, such as a twisted-pair shielded wire. Also, as a measure against crosstalk in the connection cable 64, the connection cable 64 may be split into two cables. That is, one cable is preferably a multi-pair shielded cable that includes a power supply line of the preamplifier unit 210 and an output signal line of each reception coil 6-k from the amplification filter unit group 79. Also, the other cable is preferably another multi-pair shielded cable that includes input signal lines for excitation signals to each oscillation coil 5A-k and each oscillation coil 5B-k, and output signal lines of the acceleration sensor unit 212, the angular velocity sensor unit 214, and the temperature sensor unit 216.

Thus, the connection cable 64 is preferably configured with a total of two connection cables. The connection cable 64 extends under the vehicle 200 and connects with the processing device 3 through an introduction port under a floor of the vehicle. The connection cable 64 is firmly fixed and held by using a metal binding band or the like in a state where there is no slack of the connection cable 64 under the vehicle 200 so as not to interfere with the traveling of the vehicle. The installation of the connection cable 64 from the detection device 2 to the processing device 3 is preferably designed so that a length of the cable can be shortened as much as possible and an installation route avoids positions where electromagnetic noise is likely to occur from the vehicle 200.

### Principles of Detection of Peculiar Points such as Rail Fracture Points or Seam Points

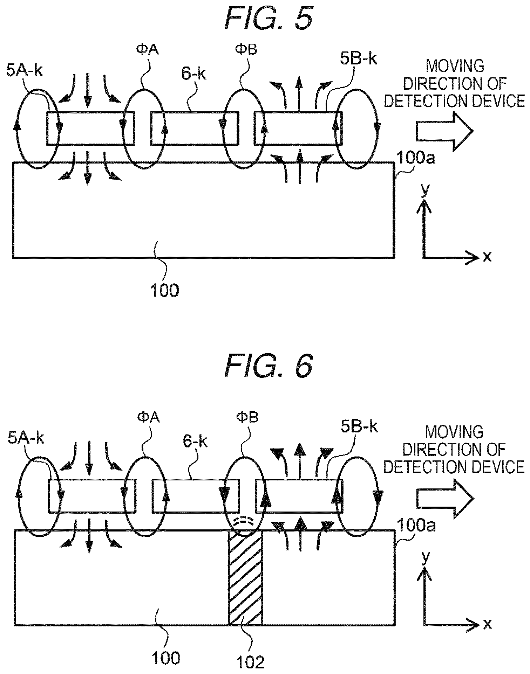

FIG. 5 is a schematic diagram illustrating an operating state of the present embodiment. The oscillation coils 5A-k and 5B-k generate alternating magnetic fields with reversed phases at the same time when an electric current is supplied from the processing device 3 (see FIG. 1). Specifically, the oscillation coils 5A-k and 5B-k are connected in series (or in parallel) to each other at the start or end of the coated copper wire, and when an AC voltage is applied from the processing device 3, an alternating magnetic field is generated. Then, when magnetic fluxes ΦA and ΦB generated from the oscillation coils 5A-k and 5B-k propagate to the tread 100a (see FIG. 1) of the rail 100, a magnetic flux flow occurs inside the rail 100. Here, a traveling direction of the vehicle 200, which is a moving direction of the detection device, is defined as an "x-direction". Also, a direction in which the magnetic flux of the reception coil 6-k is detected, that is, a separation direction between the rail 100 and the detection device 2 is defined as a "y direction".

FIG. 5 illustrates an example of the rail 100 in which there is no change in the rail state in a vicinity of the oscillation coils 5A-k and 5B-k, and the reception coil 6-k. Here, a case where there is no change in the rail state means a case where there is no seam or a sound rail without rail fracture. Magnetic flux components interlinking with the reception coil 6-k are canceled because the magnetic fluxes ΦA and ΦB are in opposite directions, and the magnetic flux components depend on strength balance of the magnetic fluxes ΦA and ΦB. Therefore, when there is no change in the rail state, the interlinkage magnetic flux of the reception coil 6-k becomes almost zero, and the induced voltage of the reception coil 6 also becomes almost zero.

FIG. 6 is a schematic diagram illustrating another operating state of the present embodiment.

FIG. 6 illustrates an example in which a peculiar point 102 exists in the vicinity of the oscillation coils 5A-k and 5B-k, and the reception coil 6-k. Here, the peculiar point 102 refers to a point having magnetic properties different from those of the ordinary rail 100. Specifically, the peculiar points 102 can be broadly classified into "seam points" and "rail fracture points". That is, the peculiar point 102 is a seam point or rail fracture point.

The meanings of the "x direction" and the "y direction" in FIG. 6 are the same as in FIG. 5. In the illustrated example, the flow of magnetic flux generated in the rail 100 by the oscillation coils 5A-k and 5B-k is disturbed, and a magnetic flux leaks from the tread 100a of the rail 100. Therefore, when the reception coil 6-k passes over the peculiar point 102, an induced voltage change of the reception coil 6-k is larger than an induced voltage change in the case illustrated in FIG. 5.

The rail state monitoring apparatus 1 in the present embodiment detects the generated leakage magnetic field based on the change in the flow of the magnetic flux generated in the railroad rail 100, which is an inspection target object, near the peculiar point 102. As an analytical model of this leakage magnetic field, the leakage magnetic field generated in a space can be expressed based on a dipole model. Here, as an example, a case is assumed where the peculiar point 102 is a seam point of the rail 100 in the model. In the leakage magnetic field component generated from the y direction of the rail 100, a bipolar magnetic flux change having an extreme value (maximal value and minimal value) in the x direction appears with a central position of the seam point as an inflection point when the vehicle 200 is traveling.

### Discrimination between Seam Point and Rail Fracture Point

In the example described above, although the case where the peculiar point 102 is the "seam point" of the rail 100 is described, even when the peculiar point 102 is the "rail fracture point" of the rail 100, the rail fracture point can be similarly detected. The principles will be described below. At the rail fracture point of the rail 100, the rails are separated from each other due to metal fatigue that occurred on the rail 100 as the vehicle travels. Therefore, when the detection device 2 passes over the rail fracture point, the flow of the magnetic fluxes ΦA and ΦB (see FIG. 6) in the rail 100 is disturbed, similar to when the seam described above is detected. As a result, the detection device 2 can detect the presence of the rail fracture point.

The seam point(s) and the rail fracture point(s) are of similar shapes where the rails are separated from each other.

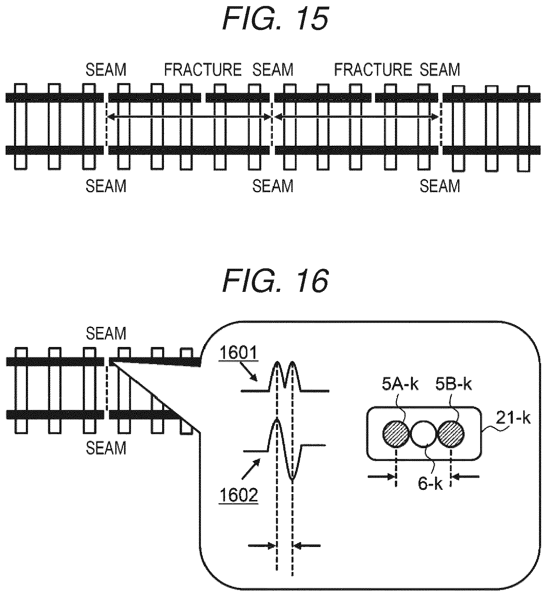

Therefore, in the present embodiment, the processing device 3 discriminates whether the peculiar point 102 is a seam point or a rail fracture point based on the magnetic flux disturbance detected by the detection device 2. For this discrimination, an installation configuration is used in which the left and right rails 100 laid in a track are at similar positions (left-right symmetrical positions). That is, since the processing device 3 can monitor the state of the left and right rails 100, the processing device 3 determines that there is a rail seam when a bipolar magnetic flux change occurs in detection signals from the left and right rails 100 at the same time (or the position of the same traveling point). On the other hand, when a bipolar magnetic flux change occurs in the detection signal from one of the left and right rails 100, the processing device 3 determines that there is a rail fracture (see FIG. 15).

In discriminating between the seam points and the rail fracture points, the rails 100 are laid regularly in the track, and thus seams are present at certain intervals (see FIG. 15). The standard railroad rails are generally laid at 25 m intervals. That is, when the rail state monitoring apparatus 1 detects that bipolar magnetic flux changes occur continuously at regular intervals from the left and right rails 100 at the same time (or the position of the same traveling point), it is determined that there is a seam point.

When the measurement time in the time-series data (data representing the time-series of the detection signal strength) of the detection signal obtained by the rail state monitoring apparatus 1 is converted to a movement distance of the vehicle 200, the distance between the extreme values of the bipolar magnetic flux change generated from the seam point is a numerical value similar to the distance between the centers of the oscillation coils 5A-k and 5B-k illustrated in FIG. 6 (see reference numeral 1601 or reference numeral 1602 in FIG. 16). For example, when the diameter of each of the oscillation coils 5A-k and 5B-k and the reception coil 6-k is 20 mm and the coils are arranged close to each other, the distance between the extreme values of the bipolar magnetic flux change generated from the seam point is 40 mm. On the other hand, a separation distance between the rails is not uniform at the rail fracture point unlike the seam point, so the distance between extreme values has a significant difference compared to the seam point. Therefore, the processing device 3 determines if the distance between extreme values is the same (including that the difference is equal to or less than a predetermined difference) as the distance (for example, 2d) between the extreme values for the seam based on the diameter (for example, d) of the coils and the arrangement of the oscillation coils 5A-k and 5B-k and the reception coil 6-k. When a determination result is true, the peculiar point is a seam point. When the determination result is false, the peculiar point is a rail fracture point. Such discrimination is possible.

An amount of clearance, which is a separation interval between rails at the seam point of the rails 100 in the track may be adjusted to change its size according to the season, taking into account the expansion and contraction of the rails due to a temperature, but basically the amounts of clearance are the same at respective seam points. On the other hand, rail fracture points are not artificially separated in rails like the seam points, but are naturally occurring due to metal fatigue, so the separation end surfaces of the rails are not uniform. As a result, the states of the rail fracture points are not the same for each existing point. In other words, with regard to rail fracture, there are cases where the separation between rails is not evenly uniform, such as at the seam points, such as where the rails are separated obliquely, or where the separation is partial.

The signals detected by the magnetic sensor units 21-1 to 21-N show similar responses at the seam points, regardless of the located positions of the magnetic sensors. For example, respective magnetic sensor units 21 have similar signal strengths (peak-to-peak values) between extreme values and distances between extreme values in a detection signal with bipolar magnetic flux changes. On the other hand, at the rail fracture points, due to the uneven separation of the rails, the respective magnetic sensor units 21 do not have similar signal strengths (peak-to-peak values) between extreme values and the distances between extreme values, and variations occur. That is, by monitoring the deviation of the detection signal obtained by each magnetic sensor unit 21, it is possible to discriminate between the seam point and the rail fracture point.

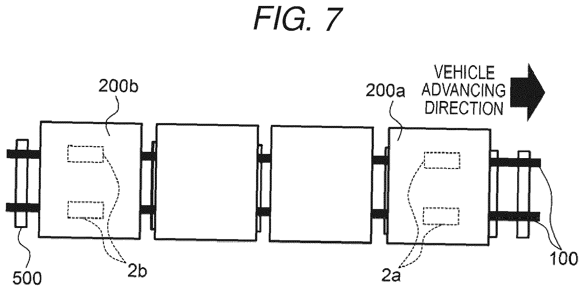

Considering the risk of a rail fracture that occurs when the vehicle travels, rail state monitoring apparatuses 1 are installed at the front and rear ends of the vehicle 200. As illustrated in FIG. 7, when a train is composed of a plurality of vehicles 200, for example, a detection device 2a is mounted on a leading vehicle 200a, and a detection device 2b is mounted on a tailing vehicle 200b (for example, each of the vehicle 200a and the 200b is equipped with the rail state monitoring apparatus 1). With this installation configuration, it is possible to identify a rail fracture that occurs when the vehicle travels from a detection difference between the leading vehicle 200a and the tailing vehicle 200b. That is, at the seam point, similar detection signals are obtained from the leading vehicle 200a and the tailing vehicle 200b. On the other hand, when the detection signal is not obtained from the leading vehicle 200a but the detection signal is obtained from the tailing vehicle 200b, it can be estimated that there is a rail fracture that occurs when the vehicle travels.

### Circuit Configuration of First Embodiment

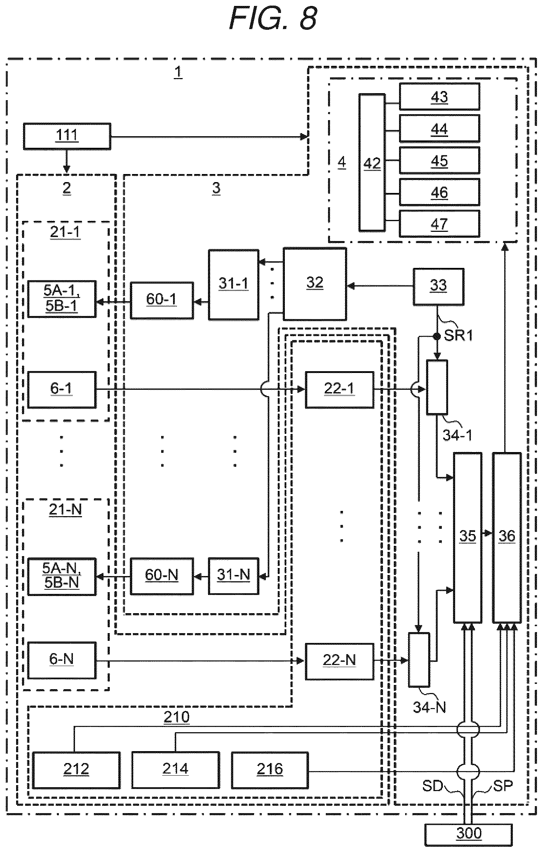

FIG. 8 is a block diagram illustrating an overall configuration of the rail state monitoring apparatus 1 according to the present embodiment.

As described above, the rail state monitoring apparatus 1 has the detection device 2, the processing device 3, and the power supply 111. The detection device 2 has the magnetic sensor units 21-1 to 21-N and the preamplifier unit 210, and the magnetic sensor unit 21-k has the oscillation coils 5A-k and 5B-k and the reception coil 6-k. The preamplifier unit 210 has the amplification filter units 22-1 to 22-N, the acceleration sensor unit 212, the angular velocity sensor unit 214, and the temperature sensor unit 216, and the amplification filter unit 22-k is connected to the magnetic sensor unit 21-k.

In addition, the processing device 3 includes resonance filter units 60-1 to 60-N, amplifier units 31-1 to 31-N, a digital-analog conversion unit 32 of N systems, an oscillation unit 33, detection units 34-1 to 34-N, an analog-digital conversion unit 35, a memory unit 36, and an evaluation device 4 (in the present embodiment, N is an integer equal to two or more, but may be one) . The detection units 34-1 to 34-N may be collectively referred to as a "detection unit group", and the resonance filter units 60-1 to 60-N may be collectively referred to as "resonance filter unit". The oscillation unit 33 outputs a sinusoidal digital oscillation signal with a predetermined oscillation frequency f. Considering the impedance of the oscillation coils 5A-1 to 5A-N and 5B-1 to 5B-N, the oscillation frequency f is selected to a value that can output a sufficient excitation magnetic field and ensure sufficient sensitivity of the reception coil 6. Also, when selecting the oscillation frequency f, it is preferable to fully consider effects on equipment of the vehicle and railroad tracks. In particular, a selected frequency range is preferably selected from a range of 10 kHz to 100 kHz so as not to affect operations of a driving safety device that supports safe operation of the vehicles and operations of a track circuit that energizes a signal on the railroad rails for signal control.

In FIG. 8, the digital-analog conversion unit 32 converts a digital oscillation signal output by the oscillation unit 33 into an analog AC voltage. The amplifier unit 31-k (k is any integer from 1 to N) amplifies the AC voltage and applies the AC voltage to the oscillation coils 5A-k and 5B-k in the magnetic sensor unit 21-k via the resonance filter unit 60-k. As a result, alternating magnetic fields with reversed phases are generated from the oscillation coils 5A-k and 5B-k. Since the detection device 2 mounted on the vehicle 200 is separated from the tread 100a (see Fig. 1) of the railroad rail so as not to interfere with the traveling of the vehicle, an alternating magnetic field from the oscillation coil of sufficient strength is required to sufficiently excite the railroad rail. The resonance filter unit 60-k suppresses an inductance component of the oscillation coil at the oscillation frequency f (or nearby frequencies), which is set in accordance with the oscillation coils 5A-k and 5B-k of the connected magnetic sensor unit 21-k, to reduce the impedance and increase the strength of the alternating magnetic field from the oscillation coils.

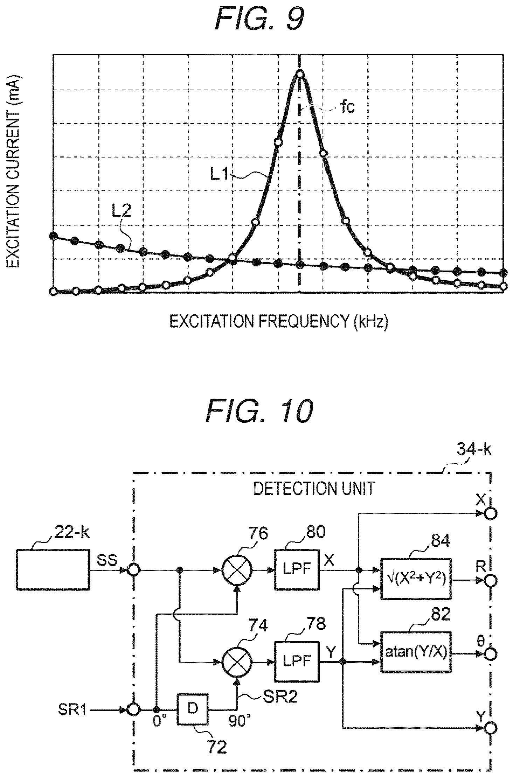

FIG. 9 is a frequency characteristic diagram of an excitation current supplied to the oscillation coils 5A-k and 5B-k.

In FIG. 9, a characteristic L1 is a characteristic of the present embodiment, and a characteristic L2 is a characteristic when the resonance filter unit 60-k is excluded. Further, the characteristic L1 is an example when a resonance frequency fc is set to 21 [kHz] . A comparison of the characteristics L1 and L2 reveals that the characteristic L1 can set the excitation current at least six times that of the characteristic L2 at the resonance frequency fc, thereby increasing the strength of the alternating magnetic field. Also, by optimizing the combination of the characteristics (direct current resistance value and inductance) of the oscillation coil 5 to be used and the resonance filter unit 60, the excitation current of the characteristic L1 at the resonance frequency fc can be increased by 10 times or more than the excitation current of the characteristic L2. This resonance frequency fc is preferably matched with the oscillation frequency f in the oscillation unit 33 (see FIG. 8). The resonance filter unit 60-k is an LC resonance circuit including a coil and a capacitor, and the oscillation coil 5 connected thereto may be used as a coil for a circuit configuration.

Referring back to FIG. 8, the amplification filter unit 22-k in the detection device 2 amplifies and performs filtering processing on the signal from the corresponding reception coil 6-k, and sends the result to the detection unit 34-k in the processing device 3. "Filtering processing" is low-pass filtering processing that mainly removes frequency components higher than the oscillation frequency f, or band-pass filtering processing that passes only a specific frequency range centered on the oscillation frequency f. Further, the detection unit 34-k uses a reference signal SR1 supplied from the oscillation unit 33 to generate signals X, Y, R, and θ (the details of these signals will be described below) based on the signal supplied from the amplification filter unit 22-k, and supplies the generated signals to the analog-digital conversion unit 35. The analog-digital conversion unit 35 converts the respective analog signals received from the detection units 34-1 to 34-N into digital signals.

By the way, in the present embodiment, the vehicle 200 is also equipped with an inspection device 300 other than the rail state monitoring apparatus 1. The inspection device 300 then supplies the rail state monitoring apparatus 1 with a position signal SD and a distance pulse signal SP. These signals will be described in detail.

A railway system is generally provided with a position detection system. In this system, an object called a "ground element" is buried in a sleeper or the like of the rail 100, and an object called an "onboard element" is installed in the vehicle 200. Then, when the onboard element passes over the ground element, the onboard element detects the ground element. Since an installation position of the ground element is known, when the onboard element detects the ground element, an absolute position of the vehicle 200 at that time becomes clear. The position signal SD described above is a signal for notifying the rail state monitoring apparatus 1 of the position information and the like from the inspection device 300.

However, the ground elements of the position detection system are often installed at intervals of several kilometers, for example. Therefore, it is not possible to acquire the position information of the vehicle 200 in a section between the ground elements only with the position detection system. Therefore, by associating the position information of the seam point detected by the rail state monitoring apparatus 1 with the position information of the ground element, the processing device 3 calculates the absolute position information of the vehicle 200 from the detection data acquired when passing the seam point. In this case, the position of the seam point first detected by the rail state monitoring apparatus 1 when the vehicle starts traveling is used as a starting point to estimate a subsequent operation position(s) of the vehicle. The inspection device 300 also detects a rotation angle of a wheel 112 (see FIG. 1) of the vehicle 200, and outputs a one-shot distance pulse signal SP each time the wheel 112 rotates by a predetermined angle. Therefore, the analog-digital conversion unit 35 converts the position signal SD and the distance pulse signal SP into digital signals and stores them in the memory unit 36. The digital signals output from the analog-digital conversion unit 35 are stored as data in the memory unit 36 and supplied to the evaluation device 4. Then, after the inspection device 300 outputs the position signal SD related to the ground element, by counting the distance pulse signal SP, the rail state monitoring apparatus 1 can estimate a current position of the vehicle 200 with reference to the position of the ground element. Together with the distance information obtained from the distance pulse signal, the vehicle traveling speed between seam points detected by the rail state monitoring apparatus 1 makes it possible to estimate the vehicle operation position when the vehicle is traveling with high accuracy.

Next, the evaluation device 4 will be described. The evaluation device 4 is equipped with hardware as a general computer such as a central processing unit (CPU), a random access memory (RAM), a read only memory (ROM), a hard disk drive (HDD), and the like, and the HDD stores an operating system (OS), application programs, various data, and the like. The OS and application programs are developed in the RAM and executed by the CPU.

The evaluation device 4 includes a control unit 42, a data processing unit 43, an output processing unit 44, an operation input unit 45, a display unit 46, and a storage unit 47. The evaluation device 4 executes an inspection processing program that specifies the peculiar points 102 of the rail 100 (see FIG. 6) based on the rail state monitoring data received from the detection device 2, the detection units 34-1 to 34-N, the analog-digital conversion unit 35, and the memory unit 36. In the present embodiment, "rail state monitoring data" corresponds to data at all stages from the reception coil 6 of the detection device 2 to the evaluation device 4.

The control unit 42 is, for example, a CPU (an example of a processor), and controls reading of inspection data from the memory unit 36, arithmetic processing, and the like. The data processing unit 43 performs inspection processing based on the inspection data (details will be described below). The display unit 46 is a liquid crystal display (LCD), a cathode ray tube (CRT) display, or the like for displaying inspection results and the like. The output processing unit 44 causes the display unit 46 to display the results of rail state monitoring and the like. In this case, the output processing unit 44 performs processing for displaying in a visually easy-to-understand display format by appropriately using a graph or table format. The operation input unit 45 is information input means such as a keyboard and a mouse. The storage unit 47 stores data such as the inspection results processed by the data processing unit 43. The data stored in the memory unit 36 are also transferred to the storage unit 47. The data processing unit 43 and the output processing unit 44 are implemented by loading programs and data stored in the storage unit 47 into the control unit 42 and executing arithmetic processing.

FIG. 10 is a block diagram of the detection unit 34-k. A received signal SS from the amplification filter unit 22-k is supplied to phase comparators 74 and 76. Also, a reference signal SR1 supplied from the oscillation unit 33 (see FIG. 7) is delayed by a delay circuit 72 by the time corresponding to the 90° phase of the oscillation frequency f. The delayed reference signal SR1 is called a reference signal SR2. The reference signal SR1 is supplied to the phase comparator 76 and the reference signal SR2 is supplied to the phase comparator 74. The phase comparator 76 extracts a component synchronized with the reference signal SR1 in the received signal SS. The extracted signal is filtered by a low pass filter (LPF) 80, and the LPF 80 outputs a processing result as a cosine signal X.

Also, the phase comparator 74 extracts a component synchronized with the reference signal SR2 in the received signal SS. The extracted signal is filtered by an LPF 78, and the LPF 78 outputs the result as a sine signal Y. A calculator 84 calculates √(X² + Y²) and outputs the result as an amplitude signal R. Further, a calculator 82 calculates an arctangent of (Y / X), that is, arctan (Y / X), and outputs the result as a phase difference signal θ.

The detection unit 34-k then supplies the above-described respective signals X, Y, R, and θ to the memory unit 36 via the analog-digital conversion unit 35 (see FIG. 8). Although in the illustrated example, the detection unit 34-k outputs all of the signals X, Y, R, and θ, the amplitude signal R and the phase difference signal θ may be calculated by the data processing unit 43 (see FIG. 8) based on the cosine signal X and the sine signal Y instead of being calculated by the detection unit 34-k.

Here, the reason why the detection unit 34-k detects the sine signal Y in addition to the cosine signal X will be explained. First, when the cosine signal X is important, setting the phase of the reference signal so that the amplitude of the cosine signal X is maximized can be considered. Then, it can be said that this set phase is the optimum phase for detecting the cosine signal X. However, the received signal SS is independent for each of the magnetic sensor units 21-1 to 21-N, and the magnetic sensor units 21-1 to 21-N have respectively different influences of their located positions and manufacturing errors. In addition, the optimum phase also changes due to secular change and temperature change. Therefore, it is troublesome to set the optimum phase of the reference signal for each of the detection units 34-1 to 34-N.

The sine signal Y is a signal component phase-shifted by 90° with respect to the excitation magnetic field that excites the rail. As in the present embodiment, when the sine signal Y is detected together with cosine signal X, the amplitude signal R can be calculated in the calculator 84 (or the evaluation device 4). Since the value of the amplitude signal R is in principle constant even when the phase difference signal θ changes, the process of optimizing the phase of the reference signal can be omitted.

In FIG. 16, a signal indicated by the reference numeral 1602 is an example of the cosine signal X or the sine signal Y. A signal indicated by the reference numeral 1601 is an example of the amplitude signal R.

### Operations of First Embodiment

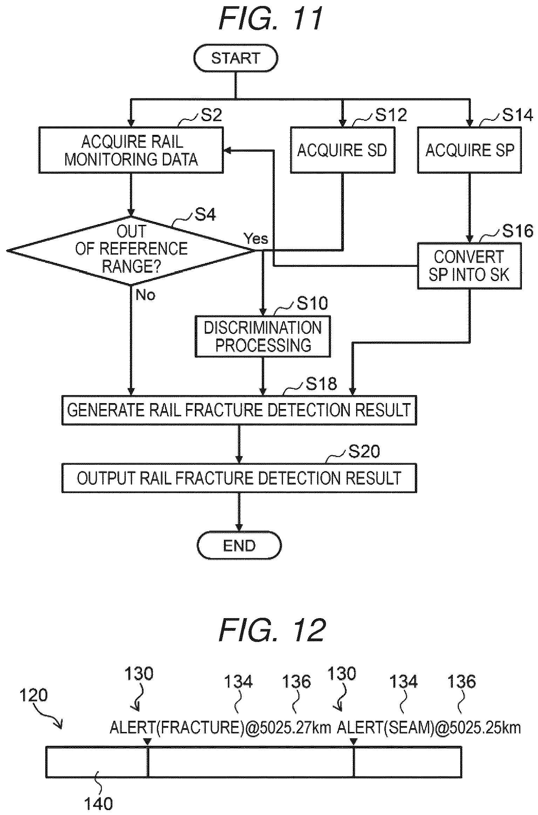

FIG. 11 is a flow chart of a rail state monitoring process executed by the data processing unit 43 of the evaluation device 4.

This process is executed at each predetermined control cycle. In FIG. 11, processes of steps S2, S12, and S14 are executed in parallel. First, the evaluation device 4 acquires the rail state monitoring data from the storage unit 47 in step S2, acquires the position signal SD from the storage unit 47 in step S12, and acquires the distance pulse signal SP from the storage unit 47 in step S14. After step S14 is completed, the evaluation device 4 converts the distance pulse signal SP into distance data SK in step S16. That is, the evaluation device 4 calculates the distance data SK based on the number of times the distance pulse signal SP was detected after the position detection system last detected the ground element. Here, the distance data SK indicates a distance from a predetermined reference position, and the distance data SK may be an example of position data.

After step S2 is completed, the evaluation device 4 determines in step S4 whether the predetermined inspection data is out of a predetermined reference range, that is, a range that makes it possible to estimate the relevant peculiar point as a "seam point". Here, the "predetermined inspection data" is, for example, the amplitude signal R illustrated in FIG. 10. When the peculiar point 102 (see FIG. 6) is a structure, the amplitude signal R is obviously larger than when the peculiar point 102 is a predicted abnormality location. Therefore, in step S4, the evaluation device 4 compares the amplitude signal R with a predetermined threshold Rth1. When "R ≠ Rth1", it may be determined "Yes", that is, there is a possibility that there is a seam point or a rail fracture point. On the other hand, when "R = Rth1" (which may include that the difference is equal to or less than a predetermined difference), it may be determined as "No", that is, there is no seam or rail fracture.

When "No" is determined here, the process proceeds to step S18. The contents of the process will be described below. On the other hand, when it is determined as "Yes" in step S4, the process proceeds to step S10. In step S10, seams and fractures are discriminated based on the signals X, Y, R, and θ illustrated in FIG. 10. During the discrimination, the evaluation device 4 also uses the position signal SD acquired in step S12. This is because the last detected ground element and a next ground element which is predicted to be detected can be recognized, so when a rail fracture is identified in the discrimination, the rail fracture is in a section between those ground elements.

When the processes of steps S2 to S16 described above are completed, the process proceeds to step S18 to generate a rail state monitoring result. Here, the "rail state monitoring result" may include the correspondence between the peculiar points (seam points and rail fracture points) and the distance data SK when step S10 is performed (when step S10 is not performed, the "rail state monitoring result" may include a result of no peculiar points). Next, when the process proceeds to step S20, the data processing unit 43 outputs the rail state monitoring result to the display unit 46 and the like, and the process of this routine ends.

FIG. 12 is a diagram illustrating an example of a display image 120 displayed on the display unit 46 in step S20 described above.

The display image 120 includes a railroad rail image 140 and a plurality of alert display objects 130. The railroad rail image 140 schematically displays the rail(s) 100. Also, the alert display objects 130 are displayed at points corresponding to a seam(s) and a rail fracture(s). The alert display object 130 includes a character string "alert", a structure type display object 134, and a position display object 136.

Here, the structure type display object 134 is a character string representing the type of "seam" or "rail fracture". Also, the position display object 136 is a numeric number representing the distance from a predetermined reference position to the structure. In this way, by displaying the rail state monitoring result on a graphical user interface (GUI) screen, the user can visually and clearly recognize where on the rails 100 there are seams and rail fractures.

In the example illustrated in FIG. 12, the structure type display object 134 included in the alert display object 130 is a character string of "seam" or "rail fracture", but may be a mark corresponding to each of them. Also, identification information (tag) of either a seam or a rail fracture may be associated with the peculiar point. As a result, it is possible to manage each rail 100 between a seam and the next seam and to manage which rail 100 has a rail fracture. Among the display objects representing seams and the display objects representing rail fractures, only the display objects representing seams may be displayed. This also makes it possible to manage the number of seams that exist in a travel section of the vehicles 200.

Also, when the detection information represents a "seam", significant changes appear in each of the signals X, Y, R, and θ illustrated in FIG. 10 depending on the amount of seam clearance (the length of a gap between rails). Therefore, when the detection information represents a "seam", the evaluation device 4 calculates the amount of seam clearance based on the signals X, Y, R, and θ, and then the calculated amount of clearance can be stored in association with the tag (identification information) described above, and the contents thereof can be displayed. Further, even when the detected peculiar point 102 is a rail fracture point, the evaluation device 4 can store the signals X, Y, R, and θ at the predicted abnormality location in association with the tags (identification information) described above, and display the contents thereof.

In this way, the tagged rail state monitoring results are useful for checking abnormalities in the track due to rail fractures and the amount of clearance. For example, locations where abnormalities are extracted in change in the time-series data of the signals X, Y, R, and θ between the tagged peculiar points can be specified as locations where rail fractures are estimated to occur, and thus the user can check the details on site. Further, since the evaluation device 4 can specify the seam position of the rail, it is possible to grasp in advance the correlation between the amount of change in the time-series data of a display target signal obtained at the seam and the amount of clearance. As a result, it becomes possible to extract the clearance amount of all seams in a travel section when the vehicle is traveling. Here, the clearance amount is affected by the outside air temperature, and the optimum state differs depending on the cold and warm seasons (summer and winter). Therefore, by correcting the temperature information obtained by the temperature sensor unit 216 included in the detection device 2 to the outside air temperature when the vehicle is traveling, the temperature information can be used for managing the clearance amount by the rail state monitoring apparatus 1. In addition, since this rail state monitoring apparatus can be used while the vehicle is traveling, by calculating the difference in the acquired data for each traveling day (inspection day), it can contribute to efficient rail maintenance and management, such as grasping the rail state (occurrence of rail fracture, change in clearance amount, and the like) in the travel section, and grasping the maintenance time and maintenance position of the rail.

### Effects of First Embodiment

As described above, according to the rail state monitoring apparatus 1 of the present embodiment, the detection device 2 has the lower housing 20 and the upper housing 26. The lower housing 20 accommodates the magnetic sensor units 21-1 to 21-N and is made of a non-magnetic material. The upper housing 26 accommodates the preamplifier unit 210 and is fixed to the upper surface of the first housing 20. The connector 28 to be connected to the connection cable 64 is attached to one side face of the upper housing 26. The upper housing 26 is made of metal. Thereby, the state of the rail 100 can be accurately detected.

Further, the detection device 2 excites the tread 100a of the rail 100 with an alternating magnetic field and detects the peculiar point 102 on the tread 100a of the rail 100 based on the turbulence of the magnetic flux flow generated in the rail 100. As a result, the state of the railroad rail can be detected more accurately based on the turbulence of the magnetic flux flow generated in the rail 100.

The rail state monitoring apparatus 1 further includes the oscillation coil 5A-k that generates an alternating magnetic field to excite the rail 100, and the resonance filter unit 60-k connected to the oscillation coil 5A-k. The resonance filter unit 60-k and the oscillation coil 5A-k have a resonance frequency corresponding to the frequency of the alternating magnetic field. This makes it possible to increase the intensity of the alternating magnetic field and to detect the state of the railroad rail more accurately.

The rail state monitoring apparatus 1 further includes the output processing unit 44. The output processing unit 44 expresses the type and existing position of the detected peculiar point 102 as an image and displays the image on the display unit 46. This allows the user to visually recognize the state of the rail 100.

Also, the evaluation device 4 can manage each rail 100 using identification information (identification information of the type of the peculiar point 102) associated with the peculiar point 102 based on the discrimination result of the peculiar point 102.

Further, when it is determined that the detected peculiar point 102 is a seam of the rail 100, the evaluation device 4 calculates the amount of seam clearance based on the turbulence of the magnetic flux flow. This allows the rail state monitoring apparatus 1 to properly manage the amount of seam clearance.

Further, the evaluation device 4 monitors the rail 100 for state changes by accumulating inspection data including at least the types (seam and rail fractures) of peculiar points 102, the number of peculiar points 102, the existing positions of the peculiar points 102, information representing the occurrence of a rail fracture(s), and the amount of seam clearance, for each inspection day, and obtaining the difference in inspection data on different inspection days. As a result, changes in the state of the rail 100 can be accurately monitored based on differences in inspection data on different inspection days.

In addition, the rail state monitoring apparatus 1 of the present embodiment is provided with the detection unit group having a plurality of detection units 34-1 to 34-N for detecting the first detection signal X corresponding to a first phase (0°) of the output signal and the second detection signal Y corresponding to a second phase (90°) of the output signal for the output signal output from each of the reception coils. Thus, it is possible to accurately detect the peculiar points of the rails 100.

The plurality of detection units 34-1 to 34-N output the first detection signal X and the second detection signal Y, or the result R and/or θ obtained by performing arithmetic processing on the first detection signal X and the second detection signal Y. The processing device 3 determines the presence and type of peculiar points from time-series data of signals X, Y, R, and/or θ corresponding to a plurality of magnetic sensor units 21-1 to 21-N. The processing device 3 detects the position of the peculiar point based on the position signal SD and the distance pulse signal SP from the inspection device 300 provided in the vehicle 200 and displays the result on the display unit 46.

Here, by displaying the existing points and existing positions of peculiar points on the rail 100 on the GUI screen, the user can more accurately recognize the peculiar points that exist on the railroad rail. The position signal SD is obtained by the reaction of a sensor (onboard element) mounted on the vehicle and a sensor (ground element) installed near the laid rail during traveling. Since it is difficult to install ground elements so that the positions of all peculiar points existing on the rail 100 can be specified, the positional information of the peculiar points obtained by the position signal SD is limited. In addition, the peculiar point detection accuracy may be affected by the failure of the ground element due to outdoor installation, the response at the position where the onboard element is separated from the ground element, and the responseto the ground element in an opposite vehicle section. According to the rail state monitoring apparatus 1 of the present embodiment, using the detection device 2 mounted on a lower side of the vehicle, the peculiar point existing on the tread 100a of the rail 100 can be detected, and thus the detection position accuracy can be maintained.

### Second Embodiment

Next, a second embodiment of the invention will be described. In the following description, parts corresponding to those in FIGS. 1 to 12 are denoted by the same reference numerals, and description thereof may be omitted. In addition, hereinafter, differences from the first embodiment will be mainly described, and descriptions of common points with the first embodiment will be omitted or simplified.

### Configuration of Second Embodiment

Before describing the configuration of the present embodiment, the first embodiment described above will be reviewed again. As illustrated in FIG. 5, when there is no peculiar point such as a structure on the rail 100, the components of the magnetic fluxes ΦA and ΦB interlinking with the reception coil 6-k cancel each other out, and ideally the interlinking magnetic flux becomes zero. Therefore, the output voltage of the reception coil 6-k is ideally zero.

However, when there is a difference in the shape (inner diameter, outer diameter, coil length, or the like) of the oscillation coils 5A-k and 5B-k, the magnetic fluxes ΦA and ΦB generated by them will not be canceled in the reception coil 6-k, and thus a noise signal having the same frequency as the oscillation signal is continuously output from the reception coil 6-k. By sufficiently improving the processing accuracy of the oscillation coils 5A-k and 5B-k, this noise signal can be expected to be reduced to a level that does not pose a practical problem, but it is preferable that the noise signal can be reduced even when the processing accuracy is not high. Therefore, in the present embodiment, the noise signal is electrically canceled so that the machining accuracy required for the oscillation coils 5A-k and 5B-k can be lowered.

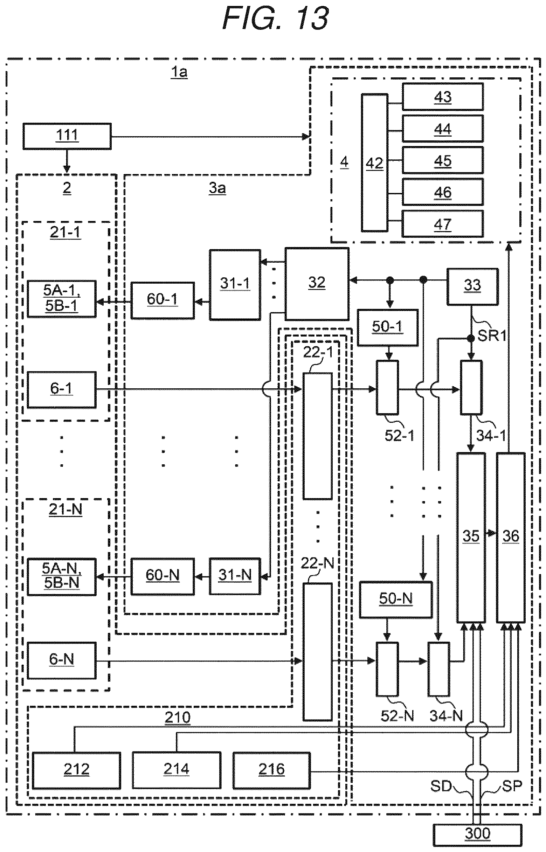

FIG. 13 is a block diagram illustrating an overall configuration of a rail state monitoring apparatus 1a according to the second embodiment of the invention.

An external configuration of the rail state monitoring apparatus 1a of the present embodiment is similar to that of the first embodiment (see FIGS. 1 to 4). Also, the configurations of the detection device 2 and the evaluation device 4 are similar to those of the first embodiment (see FIG. 8). However, instead of the processing device 3 of the first embodiment, a processing device 3a is applied in the present embodiment.

The processing device 3a is provided with correction signal generation units 50-1 to 50-N and subtraction units 52-1 to 52-N corresponding to the amplification filter units 22-1 to 22-N. The correction signal generation units 50-1 to 50-N are collectively called a correction signal generation unit group, and the subtraction units 52-1 to 52-N are collectively called a subtraction unit group. As described above, the induced voltage output from the magnetic sensor unit 21-k is superimposed with the noise signal of the oscillation frequency f, and this noise signal is amplified in the amplification filter unit 22-k. In order to cancel this noise signal, the correction signal generation unit 50-k attempts to generate a correction signal having amplitude and phase substantially equal to those of the noise signal. That is, the amplitude and phase are preset in the correction signal generation unit 50-k according to the characteristics of the magnetic sensor unit 21-k.

Then, the subtraction unit 52-k cancels the noise signal by subtracting the correction signal from the output signal of the amplification filter unit 22-k. As a result, signals with noise signals canceled are supplied to the detection units 34-1 to 34-N. The configuration of the processing device 3a other than the above is similar to that of the processing device 3 of the first embodiment (see FIG. 8) .

According to the present embodiment, even when the machining accuracy of the oscillation coils 5A-k and 5B-k is low, the noise signal can be electrically canceled and the peculiar points of the rails 100 can be detected with high accuracy.

### Third Embodiment

Next, a third embodiment of the invention will be described. In the following description, parts corresponding to those in FIGS. 1 to 13 are denoted by the same reference numerals, and description thereof may be omitted. In addition, hereinafter, differences from the first and second embodiments will be mainly described, and descriptions of common points with the first and second embodiments will be omitted or simplified.

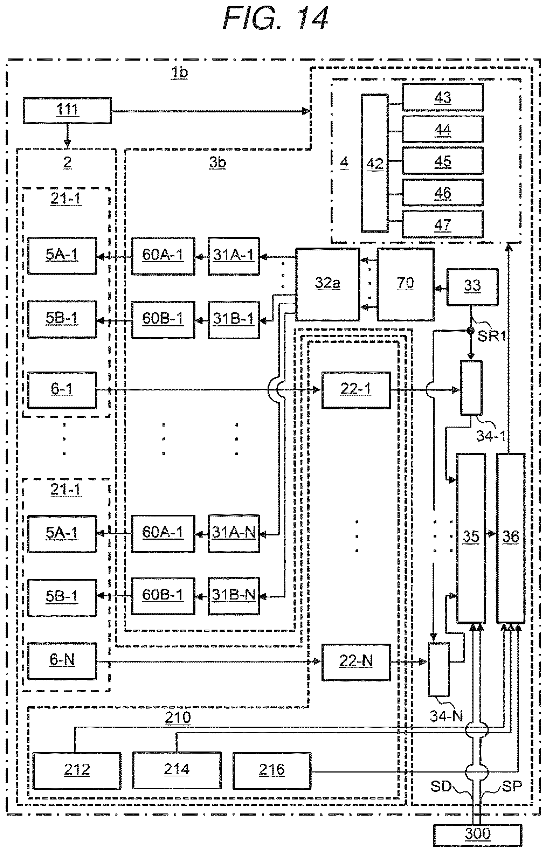

FIG. 14 is a block diagram illustrating an overall configuration of a rail state monitoring apparatus 1b according to the third embodiment of the invention. An external configuration of the rail state monitoring apparatus 1b of the present embodiment is similar to that of the first embodiment (see FIGS. 1 to 4). Also, the configurations of the detection device 2 and the evaluation device 4 are similar to those of the first embodiment (see FIG. 8). However, instead of the processing device 3 of the first embodiment, a processing device 3b is applied in the present embodiment.

The processing device 3b of the present embodiment includes a signal adjustment unit 70, a digital-analog conversion unit 32a, amplifier units 31A-1 to 31A-N and 31B-1 to 31B-N, and resonance filter units 60A-1 to 60A-N and 60B-1 to 60B-N. In addition, although in the first and second embodiments described above, the oscillation coils 5A-k and 5B-k are connected in series (or in parallel), in the present embodiment, the oscillation coils 5A-k and 5B-k are not connected to each other and are independent. The signal adjustment unit 70 adjusts the amplitude and phase of the 2N-system digital oscillation signals. That is, the signal adjustment unit 70 adjusts the amplitude and phase of the digital oscillation signal output from the oscillation unit 33 corresponding to each of the total 2N oscillation coils 5A-1 to 5A-N and 5B-1 to 5B-N.

In addition, the digital-analog conversion unit 32a converts each of the adjusted 2N-system digital oscillation signals into an analog signal. The 2N amplifier units 31A-1 to 31A-N and 31B-1 to 31B-N amplify 2N-system analog signals, respectively. In addition, the 2N resonance filter units 60A-1 to 60A-N and 60B-1 to 60B-N suppress the inductance components of each of the 2N oscillation coils 5A-1 to 5A-N and 5B-1 to 5B-N to reduce the impedance, and increase the intensity of the alternating magnetic fields from the oscillation coils. The signal adjustment unit 70 described above adjusts the output balance of the oscillation coils 5A-1 to 5A-N and 5B-1 to 5B-N so that the output voltage of the reception coils 6-1 to 6-N when there is no peculiar point 102 (see FIG. 6) is as close to zero as possible. The configuration of the processing device 3b other than the above is similar to that of the processing device 3 (see FIG. 7) of the first embodiment.

According to the present embodiment, the alternating magnetic fields from the oscillation coils 5A-1 to 5A-N and 5B-1 to 5B-N entering the reception coils 6-1 to 6-N, can be canceled, and thus the balance-adjusted outputs of the magnetic sensor units 21-1 to 21-N can be supplied to the detection units 34-1 to 34-N. As a result, the system gain in the amplification filter units 22-1 to 22-N and the detection units 34-1 to 34-N can be increased, and detection capability in the reception coils 6-1 to 6-N can be improved.

### Modification Example

The invention is not limited to the embodiments described above, and various modifications are possible. The above-described embodiments are illustrated for easy understanding of the invention, and are not necessarily limited to those having all the described configurations. Also, part of the configuration of one embodiment can be replaced with the configuration of another embodiment, and the configuration of another embodiment can be added to the configuration of one embodiment. Further, it is possible to delete part of the configuration of each embodiment, or to add and/or replace other configurations. Also, the control lines and information lines illustrated in the drawings are those considered to be necessary for explanation, and do not necessarily show all the control lines and information lines necessary on the product. In practice, it may be considered that almost all configurations are interconnected. Possible modifications to the above-described embodiments are, for example, the following.
(1) Since the hardware of the evaluation device 4 in each of the above-described embodiments can be implemented by a general computer, a program for executing the processing according to the flowchart illustrated in FIG. 11 may be installed in the computer from a program source such as a portable storage medium or server.
(2) In the above-described embodiment, the functions illustrated in FIGS. 8, 13, and 14 and the process described based on FIG. 11 or the like are explained as the functions or process implemented by executing the program by the processor, but some or all of them may be replaced with hardware functions and processes using an application specific integrated circuit (ASIC) or a field programmable gate array (FPGA).
(3) In each of the above-described embodiments, vehicles on which the rail state monitoring apparatus 1 is mounted may be railway vehicles in general, including commercial vehicles (for example, existing railroad line vehicles or Shinkansen vehicles), which are electric vehicles, and inspection vehicles which are diesel locomotive vehicles.
(4) The processing device 3 may detect the position(s) of the peculiar point(s) 102 by using a GNSS position signal obtained by a global navigation satellite system (GNSS) system provided in the vehicles 200 instead of or in addition to the position signal SD and the distance pulse signal SP.

The above description can be summarized as follows, for example. The following summary may include descriptions of supplements and modifications of the above description. In the following description, a width direction of the track is a "right-left" direction, and a longitudinal direction of the track is a "front-back" direction.

The rail state monitoring apparatus (1, 1a, and 1b) includes the detection devices (2) and the processing device (3, 3a, and 3b) provided in a train traveling on the left and right railroad rails (100) forming a track. A train is composed of one or a plurality of vehicles (200).

The detection device includes the magnetic sensor unit group (77) of one or more magnetic sensor units (21) facing the railroad rail. The magnetic sensor unit detects the peculiar point when the magnetic sensor unit passes over the peculiar point (102) on the railroad rail. The peculiar point is typically where the tread of the rail differs from normal. The detection device outputs a signal based on the results of the detection by the magnetic sensor unit group.

A train (or each vehicle) may have one or a plurality of detection devices.

The plurality of detection devices include detection devices provided symmetrically on the right and left sides of the train and/or detection devices provided on the front and back of the train. The processing device receives signals respectively output from the plurality of detection devices, and discriminates whether the peculiar point is a rail seam point or a rail fracture point, based on the detection signal(s) (for example, at least one of the signals X, Y, R, and θ) based on the signals from the plurality of detection devices.

When the detection devices are provided symmetrically on the right and left sides of the train, for example, the following may be applied. As exemplified in FIG. 15, rail seams are present in left and right rails at left-right symmetrical positions, while rail fracture points are typically not present in left and right rails at left-right symmetrical positions. Therefore, the processing device determines that the peculiar point is a rail seam point when the detection signals (detection signals with the same position (for example, x-coordinate) along a train advancing direction or with the same detection time) from both of the detection devices provided symmetrically on the right and left sides of the train indicate the peculiar point. On the other hand, the processing device determines that the peculiar point is a rail fracture point when the detection signal of one of the detection devices provided symmetrically on right and left sides of the train indicates the peculiar point.

When the detection devices are provided on the front and rear sides of the train, for example, the following may be applied. As exemplified in FIG. 15, rail seam points already exist, while rail fracture points can occur dynamically while the train is traveling. Therefore, the processing device may determine that the peculiar point is a rail seam point when the detection signals from both the detection devices provided on the front and rear sides of the train indicate the peculiar point. On the other hand, the processing device may determine that the peculiar point is a rail fracture point when the detection signal from one (typically the detection device on the rear side) of the detection devices installed on the front and rear sides of the train indicates the peculiar point. The detection devices provided on the front and rear sides of the train may include a detection device provided in a leading vehicle and a detection device provided in a tailing vehicle.

The processing device may output display information of the display object (134) representing at least one of the rail seam point as a peculiar point and the rail fracture point as a peculiar point. The display information may include information on the display object (136) of the position of the peculiar point represented by the display object.

When a rail fracture point is determined, the processing device may specify on which rail the rail fracture point is located.

When the rail fracture point is determined by peculiar point discrimination, the processing device may estimate the position of the train based on the known position of the rail fracture point. For example, with each rail seam point associated with a known position, the processing device can estimate the position associated with the rail seam point to be the position of the train when the rail seam point is determined.

As illustrated in FIG. 15, the rail seam points are evenly spaced. Therefore, when the detected peculiar points are equally spaced peculiar points, the processing device may determine that all of those peculiar points are rail seam points. On the other hand, when the detected peculiar points include a peculiar point that is not equally spaced, the processing device may determine that the peculiar point other than the equally spaced peculiar points among the detected peculiar points is a rail fracture point. In addition, for example, in this paragraph, there may be only one detection device (that is, the detection devices may not necessarily be provided symmetrically on the right and left sides of the train or on the front and rear sides of the train).

The detection device may be a device that excites the tread of the railroad rail with an alternating magnetic field and detects the peculiar point(s) of the railroad rail based on the turbulence of the magnetic flux flow generated on the railroad rail. Each of one or more magnetic sensor units may include a reception coil and two oscillation coils that pinch the reception coil. The processing device may determine that the detected peculiar point is a rail seam point when the relationship between the distance between the extreme values of the detection signal and the distance between the oscillation coils is a predetermined relationship. On the other hand, the processing device may determine that the detected peculiar point is the rail fracture point when the relationship between the distance between the extreme values of the detection signal and the distance between the oscillation coils is not a predetermined relationship. The distance between the oscillation coils may be defined based on the diameter of the oscillation coil and reception coil.

The detection devices (for example, the detection devices which are provided symmetrically on the right and left sides and/or the detection devices provided on the front and rear sides) may be present in each of two or more vehicles of a plurality of vehicles. For each of the two or more vehicles, peculiar points may be discriminated. The processing device may discriminate whether the peculiar point is a seam point or a rail fracture point, based on the result of the peculiar point discrimination for each of the two or more vehicles. For example, when the results of the peculiar point discrimination are different for different vehicles, the most common discrimination result may be taken as the final discrimination result.

## Claims

1. A rail state monitoring apparatus (1), comprising:
a plurality of detection devices (2) provided on a train that travels on left and right railroad rails forming a track; and
a processing device (3),
wherein the train is composed of one or a plurality of vehicles,
wherein for each of the plurality of detection devices (2),
the detection device (2) has a magnetic sensor unit group (77) that is one or more magnetic sensor units (21-1 to 21-N) facing the railroad rail,
the magnetic sensor unit (21-1 to 21-N) detects a peculiar point when the magnetic sensor unit (21-1 to 21-N) passes over the peculiar point on the railroad rail, and
the detection device (2) outputs a signal based on a result of the detection by the magnetic sensor unit group (77),
wherein the plurality of detection devices (2) include detection devices provided symmetrically on right and left sides of the train and/or detection devices provided on front and rear sides of the train, and
wherein the processing device (3),
receives signals output respectively from the plurality of detection devices (2), and
discriminates whether the peculiar point is a rail seam point or a rail fracture point, based on a detection signal based on the signals from the plurality of detection devices (2).

2. The rail state monitoring apparatus according to claim 1, wherein
the processing device (3),
determines that the peculiar point is a rail seam point when the detection signals from both of the detection devices provided symmetrically on the right and left sides of the train indicate the peculiar point, and
determines that the peculiar point is a rail fracture point when the detection signal of one of the detection devices (2) provided symmetrically on the right and left sides of the train indicates the peculiar point.

3. The rail state monitoring apparatus according to claim 1 or 2, wherein
the processing device (3):
determines that the peculiar point is a rail seam point when the detection signals from both of the detection devices provided on the front and rear sides of the train indicate the peculiar point, and
determines that the peculiar point is a rail fracture point when the detection signal of one of the detection devices provided on the front and rear sides of the train indicates the peculiar point.

4. The rail state monitoring apparatus according to claim 3, wherein
the detection devices (2) provided on the front and rear sides of the train include a detection device (2) provided in a leading vehicle and a detection device provided in a tailing vehicle.

5. The rail state monitoring apparatus according to at least one of the previous claims, wherein
the processing device (3) outputs display information of a display object representing at least one of a rail seam point as the peculiar point and a rail fracture point as the peculiar point.

6. The rail state monitoring apparatus according to claim 5, wherein
the display information includes information representing a display object of a position of the peculiar point represented by the display object.

7. The rail state monitoring apparatus according to at least one of the previous claims, wherein
when a rail fracture point is determined, the processing device specifies on which rail the rail fracture point is located.

8. The rail state monitoring apparatus according to at least one of the previous claims, wherein
when a rail fracture point is determined by peculiar point discrimination, the processing device (3) estimates a position of the train based on a known position of the rail fracture point.

9. The rail state monitoring apparatus according to at least one of the previous claims, wherein
the processing device (3),
determines that the peculiar points are all rail seam points when the detected peculiar points are equally spaced peculiar points, and
determines that the peculiar point other than equally spaced peculiar points among the detected peculiar points is a rail fracture point when the detected peculiar points include a peculiar point that is not equally spaced.

10. The rail state monitoring apparatus according to at least one of the previous claims, wherein
the detection device (2) is a device that excites a tread of the railroad rail with an alternating magnetic field and detects the peculiar point of the railroad rail based on turbulence in a magnetic flux flow generated in the railroad rail,
each of the one or more magnetic sensor units (21-1 to 21-N) includes a reception coil and two oscillation coils pinching the reception coil, and
the processing device (3),
determines that the detected peculiar point is a rail seam point when a relationship between a distance between extreme values of the detection signal and a distance between the oscillation coils is a predetermined relationship, and
determines that the detected peculiar point is a rail fracture point when the relationship between the distance between the extreme values of the detection signal and the distance between the oscillation coils is not the predetermined relationship.

11. A rail state monitoring method, comprising:
receiving signals output from a plurality of detection devices provided on a train that travels on left and right railroad rails forming a track;
wherein the train is composed of one or a plurality of vehicles, and
wherein for each of the plurality of detection devices,
the detection device has a magnetic sensor unit group that is one or more magnetic sensor units facing the railroad rail,
the magnetic sensor unit detects a peculiar point when the magnetic sensor unit passes over the peculiar point on the railroad rail,
the detection device outputs a signal based on a result of the detection by the magnetic sensor unit group, and
the plurality of detection devices include detection devices provided symmetrically on right and left sides of the train and/or detection devices provided on front and rear sides of the train, and
discriminating whether the peculiar point is a rail seam point or a rail fracture point, based on a detection signal based on the signals from the plurality of detection devices.
